# EUROPEAN PATENT APPLICATION

(11) **EP 2 312 117 A2**
(43) Date of publication of application: **20.04.2011**
(21) Application number: 10186897.4
(22) Date of filing: 07.10.2010
(51) Int. Cl.: E21B 33/035, F03B 17/06

(54) **Electrical mudline system**

(30) Priority: 14.10.2009 US 251619 P; 10.09.2010 US 879886
(71) Applicant: Vetco Gray Inc., Houston, TX 77041 (US)
(72) Inventor: Knox, Richard J., Mannofield, Aberdeenshire AB10 7NR (GB)
(74) Representative: Illingworth-Law, William Illingworth

(57) **Abstract**

An electrical mudline system (10) that includes a turbine-type power generation assembly (10) that can be lowered by wireline and installed at the seabed or mudline (12). A generator (16) may be installed on a wellhead (14) for support and located on a lower part of the generation assembly (10) or may be installed through a tree if a cap on the tree is removed. A frame (20) is included to provide additional support for the generation assembly (10) and protect the turbine blades (27) on the periphery of the turbine (26). The turbine (26) rotates in response to water currents and thereby rotates a shaft (28) coupled to the turbine (26) to generate electrical power. The electrical power is generated local to the well to power various types of equipment (50) at the well or in the vicinity of the well.

## Description

### Field of the Invention

This invention relates in general to generating electrical power from water currents, and in particular, to providing electrical power to subsea equipment with a subsea current power generator.

### Background of the Invention

Typically, subsea equipment used in oil and gas well completions requires electrical power to operate. Power is typically provided by an umbilical from a platform. After a platform has fulfilled its use in the production of oil or gas, however, the platform may be removed to the mudline and relocated or discarded.

If no platform is available, electrical power can also be provided to subsea equipment by an umbilical from an onshore facility. The umbilical must be sufficiently long to reach the subsea equipment to be used and may be many miles in length.

The power source can thus be located some distance from the subsea equipment offshore platforms and can result in the need for a long, heavy umbilical that is expensive to fabricate, transport, and install.

Attempts have been made to address the expense associated with an extremely long umbilical. One attempt, for example, is the offshore generation of power through the use of turbines. The energy in the water currents can be transformed into electrical power via a shaft coupled to the turbine. The turbine's rotation in response to the water currents rotates the shaft and a standard generator coupled to the other end of the shaft to produce electrical power. This approach to solving the problem of costly umbilicals requires extensive infrastructure, such as platforms or subsea support structures, to support the power generators. The infrastructure thus can also be costly.

Providing electrical power to subsea equipment requires that umbilicals extend from a platform or onshore facility, or that power be locally generated by power generation units requiring additional infrastructure to support. Current methods are expensive approaches to address the expense of electrical umbilicals. A need exists for a technique to minimize the length and thus expense of umbilicals in a cost-effective manner.

### Summary of the Invention

In an embodiment of the invention, the electrical mudline system includes a power generation assembly that can be lowered by wireline and installed at the seabed or mudline. A generator may be installed on a wellhead for support and located on a lower part of the generation assembly.

In this embodiment, the electrical mudline system may further include a tubular housing at the wellhead that protrudes above seafloor and may have a subsea tree attached to it. Once the well has been isolated or plugged, the tree can be removed and the generation assembly can be landed on the wellhead. The present invention further includes a frame that protects a turbine that has blades disposed on the periphery of the turbine that cause the turbine to rotate in response to water currents. The frame further provides additional support for the generation assembly.

In this embodiment, in response to the rotation of the shaft coupled to the turbine, the generator generates electrical power. Thus electrical power is generated localized in the well to power various types of equipment. In addition, the use of existing wellheads to provide support advantageously lowers the cost associated with installing additional support structures. Further, an umbilical may be connected to the generation assembly and run out to a desired location at sea to provide electrical power to subsea equipment, thus advantageously decreasing the length, weight, and cost of the umbilical when compared to one extending from onshore facilities.

### Brief Description of the Drawings

Figure 1, illustrates a partial sectional view of an embodiment of the power generation assembly in accordance with the invention;

Figure 2, illustrates a top sectional view of a turbine wheel located within the power generation assembly of Figure 1, in accordance with the invention;

Figure 2A, illustrates a sectional view of the turbine wheel of Figure 2, in accordance with the invention;

Figure 3A, illustrates a top view of the power generation assembly of Figure 1, in accordance with the invention;

Figure 3B, illustrates a bottom sectional view of the power generation assembly of Figure 1, in accordance with the invention;

Figure 4, illustrates a sectional view of another embodiment of the power generation assembly in accordance with the invention.

Figure 4A, illustrates a top view of the embodiment of FIG. 4, in accordance with the invention.

Figure 5, illustrates a sectional view of another embodiment of the power generation assembly in accordance with the invention.

### Detailed Description of the Invention

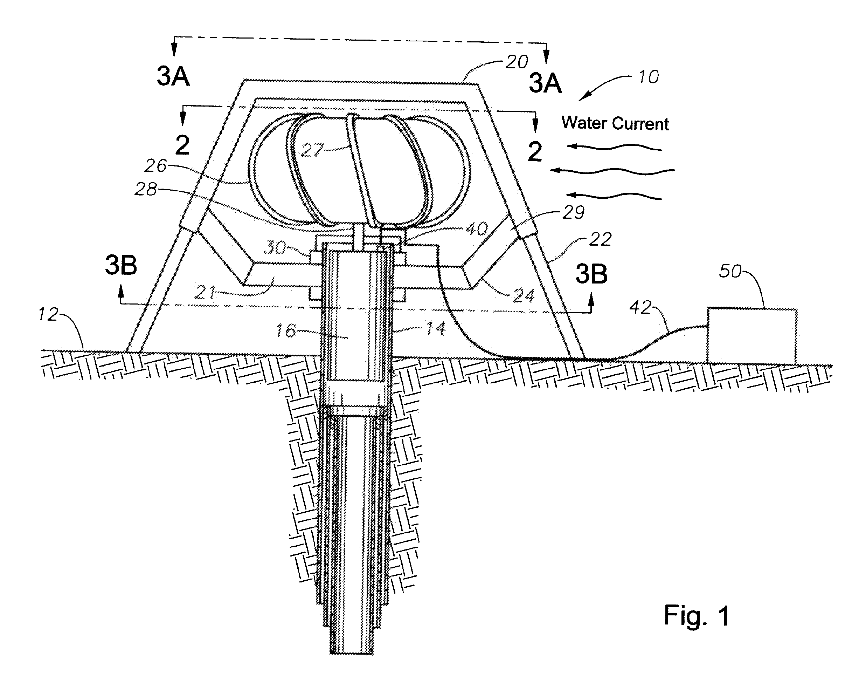

FIG. 1 shows a partial sectional view of an embodiment of a power generation assembly 10 of the invention installed at the seabed or mudline 12. In this embodiment, the power generation assembly 10 could be lowered by wireline from a rig or vessel (not shown) and landed on an existing or abandoned wellhead 14 located at the mudline 12. The wellhead 14 may be adapted to receive and secure a generator 16 located on a lower part of the generation assembly 10. The wellhead 14 provides support to the generation assembly 10. In this embodiment, a tubular housing at the wellhead 14 protrudes above seafloor and may have an attached subsea tree (not shown). The well may be plugged if needed and the tree can be removed to allow for landing of the power generation assembly 10 on the wellhead 14.

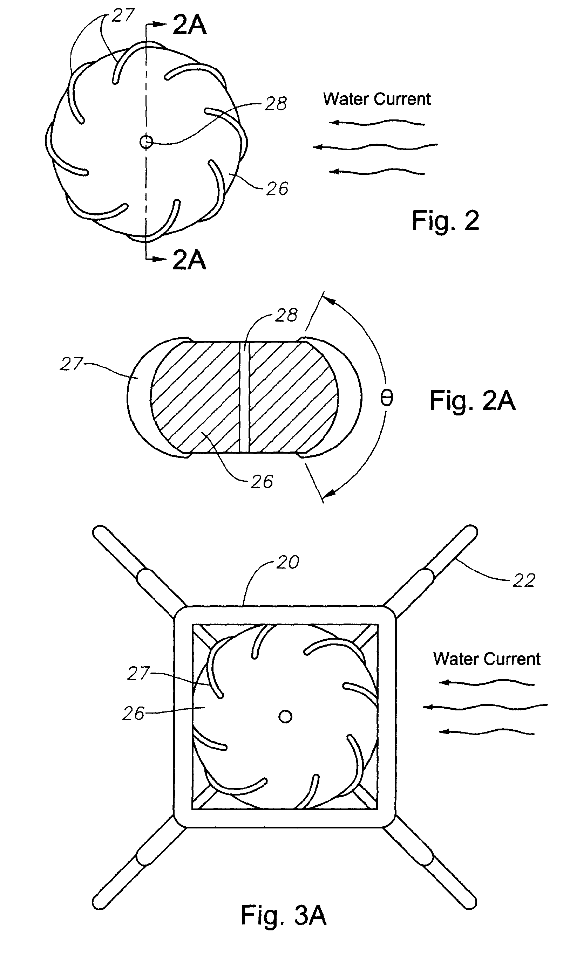

Continuing to refer to FIG. 1, the generation assembly 10 comprises a protective frame 20. Frame 20 extends over wellhead 14 and mounted on legs 22 that are supported by the mudline 12 and preferably are disposed around the periphery of the assembly 10 and extend away from the assembly 10. The legs 22 may also penetrate the mudline for additional support. A lower portion of the frame 24 connects to the existing wellhead 14. In addition to support, the protective frame 20 protects a wheel or turbine 26 enveloped by the frame 20. For example, the frame 20 may reduce the likelihood that fishing nets will snag onto the turbine 26 and other equipment. Further, the frame 20 may act as a duct to help direct water current directly onto the turbine 26, which may result in improved turbine 26 performance. The turbine 26, in this example, has blades or fins 27 disposed on the periphery of the turbine 26 that cause the turbine to rotate in response to water currents. A shaft 28 connects the turbine 26 to the generator 16. FIG. 2 shows a top view of the turbine 26 on the shaft 28 and the blades or fins 27 disposed on the turbine 26. The blades 27 may protrude past the outer surface of the turbine 26 and may curve from one end to another along the outer surface of the turbine 26 to facilitate rotation. The rotation axis of the turbine 26 in this embodiment is vertical to the water currents to facilitate coupling with one end of a shaft 28. This orientation of the turbine 26 further protects the turbine from impact from debris in the water currents and eliminates the need to pivot the turbine 26 in the direction of current, allowing the turbine to rotate in response to subsea currents having an incidence angle ranging from 0 to 360 degree with respect to the turbine 26 and thus minimizing stalling of the turbine 26 due to cancellation of forces. Other types of turbines 26, such as windmill-type turbines may also be used. FIG. 2A shows a sectional view of the turbine 26 where the blades 27 may be disposed on the turbine 26 through any region of an angle θ, which may range slightly more than zero to 180 degrees.

Continuing to refer to FIG. 1, a housing or bushing 30 provides radial support for the shaft 28. In this embodiment, the generator 16 forms the lower portion of the generator assembly 10. In response to the rotation of the shaft 28, the generator 16 generates electrical power. The electrical power generated by generator 16 is thus localized in wellhead 14. Leads (not shown) in the generator can electrically communicate with a conventional electrical penetrator or connector 40 that is located on an upper portion of the generator 16 and above the mudline 12. An umbilical 42, in electrical communication with the connector 40 is shown extending to subsea equipment 50 for providing electrical power to the subsea equipment 50. Subsea equipment 50 may be, for example, a booster pump or a gas separation unit. The length, weight, and cost of the umbilical 42 is thus minimized when compared to currently used umbilicals coming from onshore facilities. Additionally, minimal support structure is required as the existing wellhead 14 provides some of the structural support.

Referring to FIG. 3A, a top view of the assembly 10 shown in FIG. 1 is illustrated. The frame legs 22 of the frame 20 are inclined outward from top to bottom. This provides a balanced frame 20 to provide better support for the assembly 10 with the turbine 26 centrally located within the frame 20.

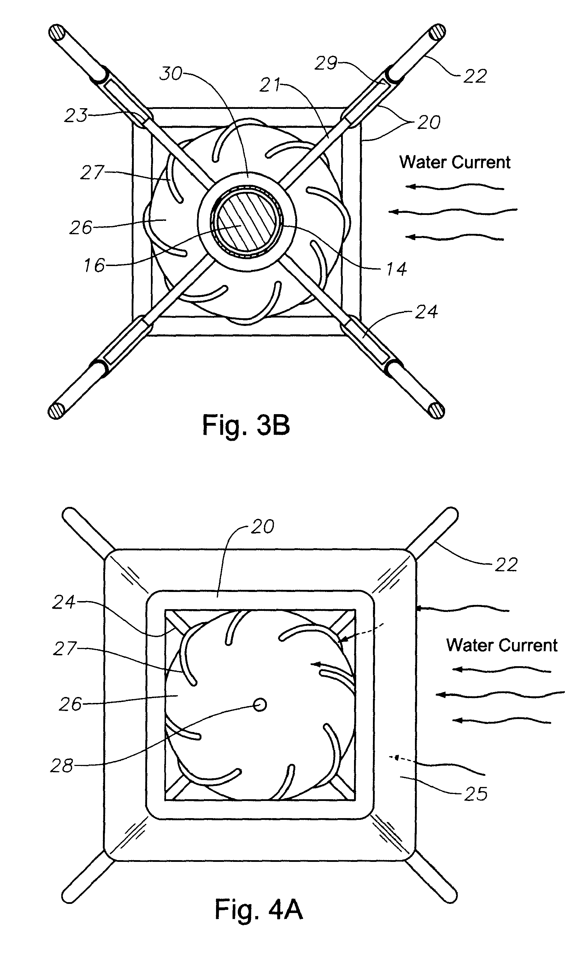

Referring to FIG. 3B, a bottom view of the assembly 10 shown in FIG. 1 is illustrated. In this example, a main frame or member 21 may be connected to each side of the housing 30 and extend diagonally to provide support for each leg 22, for example by welding. A nose end 23 on the member 21 is connected to the lower frame member 24 which extends radially outward and connects at its other end 29 to the frame 20 at a point where the frame 20 meets the legs 22. The connections of the components comprising the frame 20 may be connected via welding or soldering, for example. As previously explained, the frame legs 22 of the frame 20 are inclined outward from top to bottom to provide a balanced frame 20.

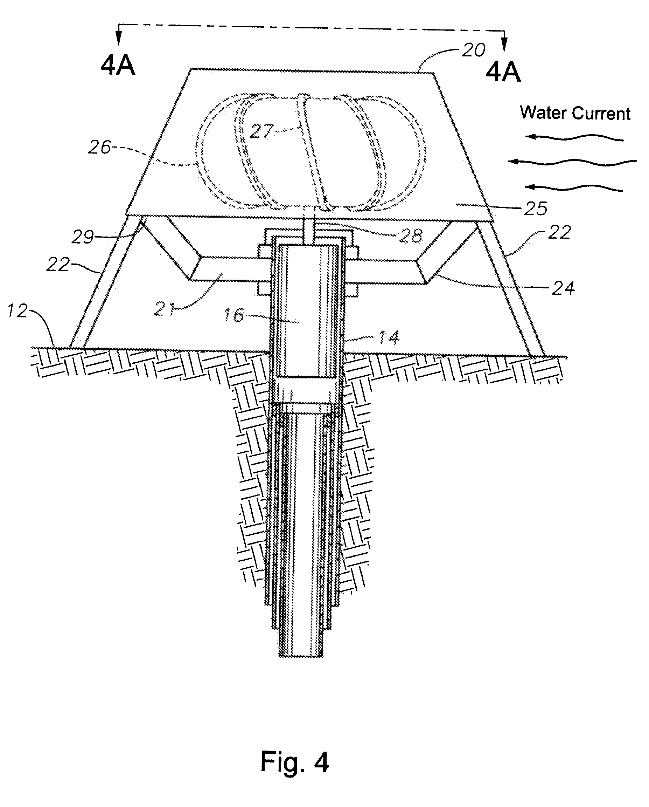

In another embodiment shown in FIG. 4, panels 25 are attached to the frame 20. The panels 25 are located across from each other on the frame 20 so that the turbine 26 is located between the panels 25. In this embodiment, the panels 25 direct the flow of the water current to the turbine 26 of the assembly 10 described above. The panels 25 thus provide additional protection to the turbine 26 and its blades 27 and also funnel the water current towards the turbine 26, which may result in increased efficiency of the turbine 26. A top view of the embodiment of FIG. 4 is shown in FIG. 4A and illustrates the channeling of the subsea currents by the panels 25.

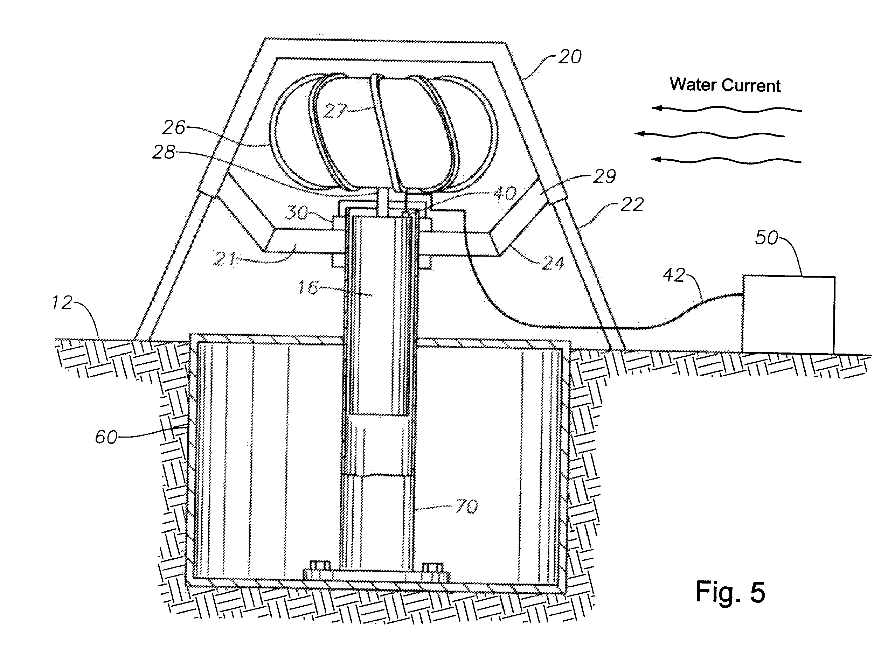

In another embodiment shown in FIG. 5, the assembly 10 described above is installed in a dummy well or caisson 60 instead of a wellhead 14 (FIG. 1). The caisson 60 can be existing or new and in the embodiment of FIG. 5 is at least partially below the mudline 12. In this embodiment, at least a portion of the generation assembly 10 is supported by a structural member 70. In this embodiment of FIG. 5, the structural member 70 is shown as a a section of pipe, secured to the bottom of the caisson 60 and protruding above the mudline 12. The structural member 70 can be adapted to receive and secure the generator 16 of the assembly 10.

The invention eliminates the problems associated with generating power for subsea equipment 50 fed by elongate and inefficient umbilicals. The power generation assembly 10 generates electrical power for subsea equipment 50 using shorter, lighter, and thus less expensive umbilicals 42 when compared to umbilicals coming from platforms or onshore facilities. Furthermore, the assembly 10 does not require the use of platforms or other extensive infrastructure as it utilizes, at least partially, the wellhead 14 or caisson 60 as support structures. The assembly 10 thus eliminates the cost of extensive infrastructure. As in the embodiment of FIG. 1, the umbilical 42 of FIG. 5 may be connected to the connector 40 and run out to provide electrical power to subsea equipment 50.

This written description uses examples to disclose the invention, including the best mode, and also to enable any person skilled in the art to practice the invention, including making and using any devices or systems and performing any incorporated methods. These embodiments are not intended to limit the scope of the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects of the present invention are defined in the following numbered clauses:
1. A current power generator, comprising:
   a support frame;
   a wellhead mounted on a seafloor;
   a generator mounted to the wellhead;
   a drive shaft mounted to the generator;
   a turbine mechanically coupled to the drive shaft; and
   an umbilical, in electrical communication with the generator and extending away from the generator, so that when subsea currents rotate the turbine, the drive shaft rotates to activate the generator and energize the umbilical.
2. The current power generator of clause 1, wherein the support frame comprises at least one horizontal frame member and at least one inclined frame member, the horizontal frame member connected to the structure embedded within the mudline, the inclined member being supported by the mudline.
3. The current power generator of clause 1 or clause 2, wherein the turbine comprises a wheel having plurality of blades for facilitating rotation of the turbine in response to the subsea current, the blades being disposed along the surface of the turbine in a curve so that the turbine will rotate for incidence angles between the subsea currents and the turbine ranging between 0 to 360.
4. The current power generator of any preceding clause, wherein the umbilical extends to and connects to a subsea equipment to thereby supply power to the equipment from the power generated by the generator.
5. The current power generator of any preceding clause, further comprising a pair of panels attached to opposing sides of the frame so that the turbine is between the panels and the panels channel the subsea current to the turbine.
6. The current power generator of any preceding clause, wherein the wellhead assembly comprises a caisson having a structural member.
7. A current power generator, comprising:
   a support frame having a plurality of legs supported by a mudline in a body of water;
   a wellhead embedded within the mudline having an end that protrudes above the mudline;
   a generator mounted to the wellhead, the generator including a rotatable shaft, operatively connected to the generator such that when the shaft rotates, the generator generates electricity;
   a wheel mounted to the rotatable shaft, capable of rotation in response to water current, the wheel having an axis of rotation normal to the water current; and
   an umbilical, in electrical communication with the generator and extending away from the generator.
8. The current power generator of clause 7, wherein the support frame comprises at least one horizontal frame member and at least one inclined frame member, the horizontal frame member connected to the structure embedded within the mudline, the inclined member being supported by the mudline.
9. The current power generator of clause 7 or clause 8, wherein the wheel further comprises a plurality of blades for facilitating rotation of the wheel in response to the water current.
10. The current power generator of any of clauses 7 to 9, wherein the umbilical extends to and connects to a subsea equipment to thereby supply power to the equipment from the power generated by the generator.
11. The current power generator of any of clauses 7 to 10, further comprising a pair of panels located across from each other and attached to the frame so that the wheel is between the panels and the panels channel the water current to the wheel.
12. The current power generator of any of clauses 7 to 11, wherein the generator is mounted within the wellhead.
13. A method for generating electrical power, comprising:
   locating a support frame approximately at a wellhead mounted on a seafloor;
   mounting a generator to the wellhead;
   mounting a drive shaft to the generator;
   mechanically coupling a turbine to the drive shaft;
   electrically communicating an umbilical with the generator; and
   extending the umbilical away from the generator, so that when subsea currents rotate the turbine, the drive shaft rotates to activate the generator and energize the umbilical.
14. The method of clause 13, further comprising the step of generating electrical power from the rotation of the turbine in response to the subsea current acting on a plurality of blades on the turbine.
15. The method of clause 13 or clause 14, further comprising the steps of extending and connecting the umbilical to a subsea equipment to thereby supply power to the equipment from the power generated by the generator.
16. The method of any of clauses 13 to 15, further comprising the step of channeling the subsea current to the turbine via a pair of panels attached to opposing sides of the frame wherein the turbine is between the panels.
17. The method of any of clauses 13 to 16, wherein the step of mounting a generator to the wellhead comprises mounting the generator on a structural member located in a caisson.

## Claims

1. A current power generator (10), **characterized by**:
a support frame (20);
a wellhead (14) mounted on a seafloor (12);
a generator (16) mounted to the wellhead (14);
a drive shaft (28) mounted to the generator (16);
a turbine (26) mechanically coupled to the drive shaft (28); and
an umbilical (42), in electrical communication with the generator (16) and extending away from the generator (16), so that when subsea currents rotate the turbine (26), the drive shaft (28) rotates to activate the generator (16) and energize the umbilical (42).

2. The current power generator (10) of claim 1, wherein the support frame (20) comprises at least one horizontal frame member (21) and at least one inclined frame member (22), the horizontal frame member (21) connected to the structure (22) embedded within the mudline (12), the inclined member (22) being supported by the mudline (12).

3. The current power generator (10) of claim 1 or claim 2, wherein the turbine (26) comprises a wheel having plurality of blades (27) for facilitating rotation of the turbine (26) in response to the subsea current, the blades being disposed along the surface of the turbine (26) in a curve so that the turbine (26) will rotate for incidence angles between the subsea currents and the turbine ranging between 0 to 360.

4. The current power generator (10) of any preceding claim, wherein the umbilical (42) extends to and connects to a subsea equipment (50) to thereby supply power to the equipment (50) from the power generated by the generator (16).

5. The current power generator (10) of any preceding claim, further comprising a pair of panels (25) attached to opposing sides of the frame (20) so that the turbine (26) is between the panels (25) and the panels (25) channel the subsea current to the turbine (26).

6. The current power generator (10) of any preceding claim, wherein the wellhead (14) assembly comprises a caisson (60) having a structural member (70).

7. The current power generator (10) of claim 1, wherein:
the support frame (20) has a plurality of legs (22) supported by a mudline (12) in a body of water;
the wellhead (14) is embedded within the mudline (12) and has an end that protrudes above the mudline (12);
the rotatable shaft (28) is operatively connected to the generator (16); and
a wheel (26) that forms a part of the turbine (26) is mounted to the rotatable shaft (28), capable of rotation in response to water current, the wheel (26) having an axis of rotation normal to the water current.

8. The current power generator (10) of claim 7, wherein the wheel (26) further comprises a plurality of blades (27) for facilitating rotation of the wheel (26) in response to the water current.

9. The current power generator (10) of claim 7, further comprising a pair of panels (25) located across from each other and attached to the frame (20) so that the wheel (26) is between the panels (25) and the panels (25) channel the water current to the wheel (26).

10. The current power generator (10) of any preceding claim, wherein the generator (16) is mounted within the wellhead (14).

11. A method for generating electrical power, comprising:
locating a support frame (20) approximately at a wellhead (14) mounted on a seafloor (12);
mounting a generator (16) to the wellhead (14);
mounting a drive shaft (28) to the generator (16);
mechanically coupling a turbine (26) to the drive shaft (28);
electrically communicating an umbilical (42) with the generator (16); and
extending the umbilical (42) away from the generator (16), so that when subsea currents rotate the turbine (26), the drive shaft (28) rotates to activate the generator (16) and energize the umbilical (42).

12. The method of claim 11, further comprising the step of generating electrical power from the rotation of the turbine (26) in response to the subsea current acting on a plurality of blades (27) on the turbine (26).

13. The method of claim 11 or claim 12, further comprising the steps of extending and connecting the umbilical (42) to a subsea equipment (50) to thereby supply power to the equipment (50) from the power generated by the generator (16).

14. The method of any of claims 11 to 13, further comprising the step of channeling the subsea current to the turbine (26) via a pair of panels (25) attached to opposing sides of the frame (20) wherein the turbine (26) is between the panels (25).

15. The method of any of claims 11 to 14, wherein the step of mounting a generator (16) to the wellhead (14) comprises mounting the generator (16) on a structural member (70) located in a caisson (60).
